# FASCICULE DE BREVET EUROPEEN

(11) **EP 1 730 560 B1**
(45) Date de publication et mention de la délivrance du brevet: **16.01.2008**
(21) Numéro de dépôt: 05744257.6
(22) Date de dépôt: 29.03.2005
(51) Int. Cl.: G02F 1/025

(54) **MODULATEUR OPTOELECTRONIQUE HAUTE FREQUENCE INTEGRE SUR SILICIUM**
INTEGRIERTER OPTOELEKTRONISCHER HOCHFREQUENZMODULATOR AUF SILIZIUM
OPTOELECTRONIC HIGH FREQUENCY MODULATOR INTEGRATED ON SILICON

(30) Priorité: 29.03.2004 FR 0450608
(43) Date de publication de la demande: 13.12.2006
(73) Titulaire: UNIVERSITE PARIS-SUD (PARIS 11), 91405 Orsay (FR); CENTRE NATIONAL DE LA RECHERCHE SCIENTIFIQUE (CNRS), 75794 Paris Cedex 16 (FR)
(72) Inventeur: LAVAL, Suzanne, F-91190 Gif-sur-Yvette (FR); MARRIS, Delphine, F-75014 Paris (FR); CASSAN, Eric, F-91300 Massy (FR); PASCAL, Daniel, F-91470 Forges-les-Bains (FR)
(74) Mandataire: Bredema
(86) Numéro de dépôt international: PCT/FR2005/000748
(87) Numéro de publication internationale: WO 2005/093480

(56) Documents cités:
- EP-A- 1 107 044
- VONSOVICI A ET AL: "MODULATION DOPED SIGE-SI MQW FOR LOW-VOLTAGE HIGH-SPEED MODULATORS AT 1.3 MUM" IEEE JOURNAL OF SELECTED TOPICS IN QUANTUM ELECTRONICS, IEEE SERVICE CENTER, US, vol. 4, no. 6, novembre 1998 (1998-11), pages 1011-1019, XP000801348 ISSN: 1077-260X
- MARRIS D ET AL: "Design of a SiGe-Si quantum-well optical modulator" IEEE JOURNAL OF SELECTED TOPICS IN QUANTUM ELECTRONICS IEEE USA, vol. 9, no. 3, juin 2003 (2003-06), pages 747-754, XP002300364 ISSN: 1077-260X cité dans la demande
- DEBARRE D ET AL: "LASER DOPING FOR ULTRA-SHALLOW JUNCTIONS MONITORED BY TIME RESOLVED OPTICAL MEASUREMENTS" IEICE TRANSACTIONS ON ELECTRONICS, INSTITUTE OF ELECTRONICS INFORMATION AND COMM. ENG. TOKYO, JP, vol. E85-C, no. 5, mai 2002 (2002-05), pages 1098-1103, XP001127753 ISSN: 0916-8524

## Description

La présente invention se rapporte aux domaines des technologies de communication et de l'électronique.
La présente invention se rapporte plus particulièrement à un modulateur de lumière aux longueurs d'ondes des télécommunications optiques (supérieures à 1,2 µm) fabriqué entièrement en silicium. Le modulateur selon la présente invention est intégrable dans un guide d'onde optique dont la section peut être submicronique, et peut fonctionner à des fréquences élevées (de l'ordre de plusieurs dizaines de GHz). La technologie employée est celle de la microphotonique sur silicium, qui est compatible avec la technologie microélectronique.
Le modulateur selon l'invention est constitué d'une diode PIN en silicium, dans laquelle sont introduits, au coeur de la région intrinsèque (I), des plans de dopage apportant soit des électrons (dopage N), soit des trous (dopage P), localisés de façon non uniforme dans la structure. L'ensemble est placé dans un guide d'onde optique submicronique en silicium sur isolant, les plans de dopage étant centrés sur le mode du guide. Les porteurs libres sont retirés de la structure par polarisation de la diode en inverse, ce qui conduit à une variation de l'indice de réfaction du matériau, donc à une variation de phase d'une onde lumineuse qui le traverse. Cette zone active, placée dans une structure interférométrique (comme les dispositifs classiques du type cavité Fabry-Perot ou interféromètre de Mach-Zehnder) réalisée dans les microguides d'ondes optiques permet d'obtenir une modulation d'intensité de la lumière à des fréquences de plusieurs dizaines de Giga Hertz.

L'art antérieur connaît déjà, par la demande de brevet international WO 02/10816 (Centre National de la Recherche Scientifique), un système d'interconnexion optique pour circuit intégré réalisé sur substrat SOI, c'est-à-dire un substrat présentant un film de silicium supporté par une couche de matériau électriquement isolant, le circuit microélectronique comprenant au moins un bloc fonctionnel à connecter réalisé dans le film de silicium. Le système comprend au moins un microguide optique constitué d'un ruban délimité dans le film de silicium par des zones de confinement latéral pour connecter le bloc fonctionnel.
L'art antérieur connaît également, par la demande de brevet international WO 00/10039 (Bookham Technology), un modulateur électro-optique. Cette invention porte sur un substrat dopé s'utilisant de chaque côté d'un guide d'onde en arête (ridge waveguide) pour réguler l'indice de réfraction du matériau du guide d'onde. Au lieu de diffuser simplement le dopant à partir de la surface du substrat voisine du guide d'onde, on grave le substrat et on y diffuse le dopant à partir d'une face latérale de la région gravée. Le profil de dopant s'établit dans le sens horizontal, ce qui permet de le contrôler. On peut ainsi obtenir un profil dé dopage uniforme verticalement assurant une densité uniforme de courant selon la direction verticale. Si on procède à une gravure humide anisotrope à la suite de la gravure initiale, on obtient un profil qui concentre la densité du courant à une hauteur sélectionnée du substrat.
On connaît également, par la demande de brevet international WO 02/069025 (Bookham Technology), un dispositif électro-optique comprenant une couche semi-conductrice dans laquelle on a formé un guide d'onde, un modulateur formé à travers le guide d'ondes comprenant une région dopée p sur un côté et une région dopée n sur l'autre côté du guide d'onde, au moins une des régions dopées s'étendant à partir de la base d'un évidement formé dans la couche semi-conductrice. De cette façon, les régions dopées peuvent s'étendre plus profondément dans la couche semi-conductrice et empêcher en plus la fuite des porteurs de charge, sans devoir augmenter la distance de diffusion du dopant et faire subir une charge thermique supplémentaire au dispositif. Dans un dispositif SOI, la région dopée peut s'étendre jusqu'à la couche isolante. Idéalement, les deux régions dopées p et n s'étendent depuis la base d'un évidement, mais cela peut s'avérer inutile dans certaines conceptions. Des couches isolantes peuvent être utilisées de manière à garantir que le dopant s'étend uniquement à partir de la base de l'évidement, donnant une région dopée plus clairement définie. Le (ou chaque) évidement peut présenter des côtés non verticaux, tels que ceux formés par des gravures de rainures en v, une combinaison de parois latérales verticales au niveau de la base de l'évidement et une paroi latérale non verticale au niveau de l'ouverture pouvant être utilisée.
Ces deux demandes de brevets internationaux WO 01/10039 et WO 02/069025 décrivent des structures fonctionnant par injection de porteurs. Aucun de ces documents ne divulgue, ni ne suggère la possibilité d'introduire des plans de dopage pour confiner initialement les porteurs pour fonctionner par déplétion. Ils portent essentiellement sur la technologie de réalisation des zones N⁺ et P⁺ de la diode, de part et d'autre du guide, par diffusion des dopants.

On connaît également, par la demande de brevet international WO 00/58776 (Bookham Technology), un modulateur de phase pour guide d'ondes en semi-conducteur. L'invention objet de cette demande concerne un modulateur de phase optique comportant un guide d'onde semi-conducteur en arête (rib waveguide) présentant des zones dopées P et N formant une jonction PN le long de l'arête avec des électrodes servant à appliquer une polarisation inverse à ladite jonction afin d'étendre une zone de désertion de porteurs et, ainsi, de modifier l'indice de réfraction. La jonction PN est décalée par rapport à l'axe central de l'arête, mais une fois la polarisation inverse appliquée, la zone de désertion des porteurs s'étend sur un axe central du guide d'onde. La structure proposée dans ce document est donc basée sur une variation d'indice de réfraction par déplétion de porteurs dans un guide en arête. Le principe de l'invention décrite dans cette demande de brevet PCT est très différent de l'invention objet de la présente demande : il s'agit dans ce document de l'art antérieur de placer une (ou plusieurs) jonction(s) PN dans la diode, formant ainsi une structure N⁺ / N⁻ / P⁻ / P⁺ et d'augmenter la zone de charge de d'espace de la jonction N⁻ / P⁻ par polarisation inverse de la diode N⁺ / N⁻ / P⁻ / P⁺. L'efficacité d'une telle solution est limitée car la zone de charge d'espace ne peut pas être très étendue, la largeur active est limitée ainsi que la variation du nombre global de porteurs. Les deux types de porteurs (électrons et trous) interviennent. Les fréquences visées sont au mieux de quelques Giga Hertz. Au contraire, dans la présente invention, un seul type de porteurs est utilisé, les zones dopées sont étroites et facilement centrées sur le mode optique guidé. La solution selon la présente invention permet de contrôler le nombre de porteurs initialement présents et de les évacuer avec des tensions appliquées de quelques Volts seulement.

L'art antérieur connaît également, par la demande de brevet européen EP 0433552 (IBM), un modulateur optique entièrement en silicium, intégré dans un guide d'onde SOI en arête ("rib"). Ce document porte essentiellement sur un fonctionnement par injection, avec une diode pin polarisée en direct.

Dans l'arrière-plan technologique de l'invention, on trouvera, en sus des brevets et demandes de brevets cités, des publications scientifiques :
- R. L. Espinola et al., Fast and low-power thermooptic switch on silicon-on-insulator, IEEE Phot. Techn. Lett., vol. 15, octobre 2003, page 1366 ;
- A. Sciuto et al., Design, fabrication, and testing of an integrated Si-based light modulator, Journ. Lightwave Techn., vol. 21, janvier 2003, page 228 ;
- A. Irace et al., All-silicon optoelectronic modulator with 1 GHz switching capabilities, Electronics Letters, vol. 39, janvier 2003, page 232 ;
- C.A. Barrios et al., Electrooptic modulation of silicon-on-insulator submicrometer-size waveguide devices, Journ. Lightwave Techn., vol. 21, octobre 2003, page 2332
- D. Marris et al., Design of a SiGe/Si quantum-well optical modulator, Journal of Selected Topics in Quantum Electronics, vol. 9, mai 2003, p. 747.

On connaît aussi l'article « A high-speed silicon optical modulator based on a metal-oxide-semiconductor capacitor » (A. Liu et al., Intel) paru en février 2004 dans la revue scientifique Nature. Cet article propose un modulateur optique silicium. Une couche d'accumulation dans une structure MOS est créée. Il n'est pas fait mention dans cet article de plans de dopage, contrairement à la présente invention.

Les modulateurs de lumière fonctionnant à des fréquences de quelques dizaines de GHz sont actuellement réalisés soit en niobate de lithium, soit avec des semi-conducteurs III-IV sur substrat InP pour les longueurs d'ondes des télécommunications optiques (1,3 µm et autour de 1,55 µm), donc *a priori* non compatibles avec une intégration sur substrat silicium.

Jusqu'ici, la rapidité des modulateurs de lumière à base de silicium a été la plupart du temps limitée par le processus physique mis en oeuvre à des fréquences de quelques centaines de MHz. En effet, ils fonctionnent pour la plupart par injection de porteurs libres et non par désertion. Le temps de réponse est alors généralement limité par la durée de vie des porteurs et par les effets thermiques liés au passage du courant. Des publications scientifiques récentes portant sur des modulateurs tout silicium intégrés en guide d'ondes fonctionnant par injection donnent des temps de réponse qui ne descendent pas en dessous de la nanoseconde. Les effets d'absorption dans un plasma de porteurs libres, modulés par déplacement de la position de ce plasma sous l'effet d'une tension dans une structure BMFET, dérivée du MOSFET, ne sont pas plus rapides. Par ailleurs, la désertion sous la grille d'un MOSFET est limitée par l'apparition d'une couche d'inversion et trop localisée pour être efficace. Le fonctionnement basé sur la création d'une couche d'accumulation dans une capacité MOS conduit aux meilleurs résultats en rapidité (bande passante de 2,5 GHz), mais cette couche est également de très faible épaisseur, et difficile à centrer sur le mode optique d'un guide d'onde à faibles pertes, donnant donc une efficacité limitée.
Pour réaliser des modulateurs plus rapides dans la filière silicium, des structures à base de multipuits quantiques SiGe/Si, fonctionnant par désertion, ont été proposées ("Modulation doped SiGe-Si MQW for low-voltage high-speed modulators at 1.3µm", j. of sel. topics in quant. elec., vol. 4, no 6, p. 1011). Ce type de structure permet d'obtenir des temps de réponse de l'ordre de 50 à 100 ps, limités par le temps d'extraction des porteurs à partir des puits. La fréquence maximale de fonctionnement ne dépassera pas 12 GHz. Ce type de modulateurs forment la préambule de la revendication 1.

Parmi les nombreux avantages de la structure selon la présente invention, on trouvera notamment :
- un fonctionnement par désertion, ce qui permet d'utiliser un faible courant électrique (diode polarisée en inverse) et donc une dissipation thermique faible ;
- un phénomène intrinsèquement très rapide, de l'ordre de quelques picosecondes dans des dimensions submicroniques ;
- un recouvrement optimisé entre la répartition des porteurs libres et le mode du guide optique, donc une meilleure sensibilité ;
- une compatibilité maximale avec la technologie des circuits intégrés microélectroniques CMOS.

À cet effet, l'invention concerne selon son acception la plus générale, un composant optoélectronique pour commander un signal optique tel que décrit dans la revendication 1.
De préférence, lesdites couches de silicium sont soit toutes dopées de type N⁺, soit toutes dopées de type P⁺.
Selon une première variante, les plans de dopage sont parallèles au substrat.
Avantageusement, l'électrode supérieure est décalée par rapport à l'arête du guide d'onde qui délimite latéralement la zone active. Le contact électrique est assuré par exemple par le dépôt d'une couche de silicium dopé, constituant la zone N⁺ ou P⁺ de la diode, qui est monocristallin sur l'arête du guide et polycristallin sur l'isolant de part et d'autre
De préférence, la seconde électrode vient en contact avec la couche inférieure de silicium dopée se prolongeant latéralement au delà de la zone active.
Selon un mode de réalisation particulier, au moins l'une des deux électrodes vient en contact avec une couche de silicium dopé (N⁺ ou P⁺) de la diode PIN, par l'intermédiaire d'une couche de siliciure.
Selon une deuxième variante, les plans de dopage sont perpendiculaires au substrat et les zones N⁺ et P⁺ de la diode sont de chaque côté du guide, parallèlement à l'arête.
L'invention concerne également l'application d'un tel composant optoélectronique pour la réalisation d'un commutateur optoélectronique ainsi que pour la réalisation d'un modulateur optoélectronique
L'invention concerne encore un procédé de fabrication d'un composant optoélectronique selon l'invention caractérisé en ce que l'on procède à une croissance épitaxiale de couches très minces de silicium dopé N⁺ ou P⁺.
Selon une variante, on réalise un dopage assisté par laser pour réaliser les couches N⁺ ou P⁺ dans le silicium de la zone active.

On comprendra mieux l'invention à l'aide de la description, faite ci-après à titre purement explicatif, d'un mode de réalisation de l'invention, en référence aux figures annexées :
- la figure 1 illustre un mode de réalisation en structure verticale du modulateur selon l'invention ;
- la figure 2 illustre un mode de réalisation en structure horizontale du modulateur selon l'invention ; et

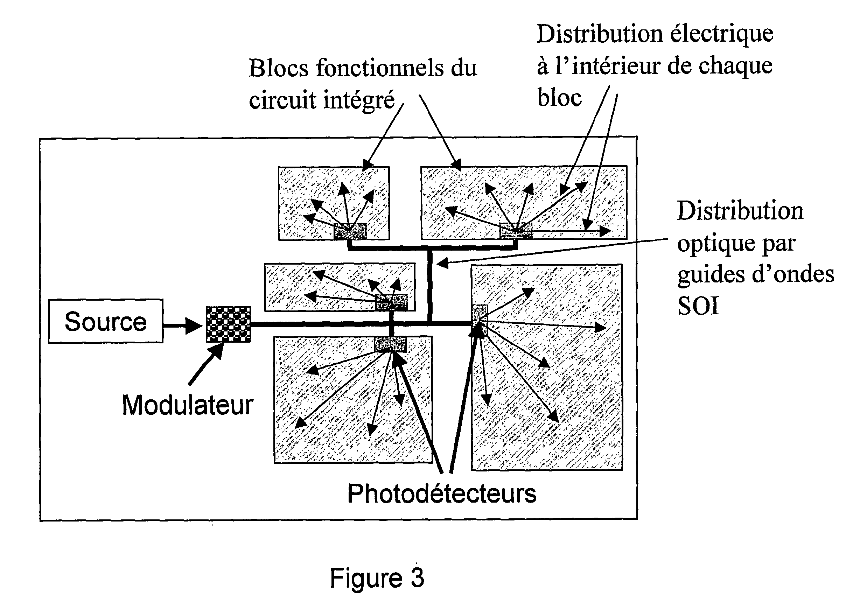

- la figure 3 représente une utilisation du modulateur selon l'invention dans une distribution optique de signal dans le cadre d'un circuit intégré microélectronique.

La transmission d'une information par voie optique nécessite le codage de l'intensité lumineuse, ce qui peut se faire soit par modulation directe de la source, soit de manière préférentielle pour les fréquences élevées grâce à un modulateur de lumière. Les télécommunications optiques en utilisent depuis longtemps, à des fréquences allant jusqu'à une quarantaine de GHz, réalisés soit en niobate de lithium, soit à base d'InP et de composés ternaires ou quaternaires (GaInAsP par exemple). Par rapport à ces semi-conducteurs III-V, la microphotonique sur silicium sur isolant (SOI, constitué d'un film mince de silicium cristallin, séparé du substrat de silicium par une couche d'oxyde enterrée) permet la réalisation de systèmes beaucoup plus compacts (guidage de la lumière, multiplexeurs / démultiplexeurs, ...) et commence à être considérée pour les applications dans ce domaine. L'intégration d'un modulateur performant en silicium, sur substrat SOI, permet d'avancer dans le développement de systèmes de télécommunications optiques à faible coût.

Par ailleurs, en microélectronique, les substrats SOI commencent à être utilisés pour les circuits hautes performances. Néanmoins, la montée en fréquence des microprocesseurs va se heurter dans les prochaines années (à échéance de 5 ans environ) à des limitations provenant des interconnexions métalliques dans le circuit, en particulier pour la distribution du signal d'horloge qui rythme le fonctionnement du processeur. La solution alternative la plus probable est de distribuer le signal d'horloge en optique. Les inventeurs de la présente invention ont démontré expérimentalement qu'une distribution d'un signal optique d'un point d'entrée vers 16 ou 64 points de sortie était possible, en utilisant des guides d'ondes optiques submicroniques en silicium sur isolant.
Il est alors nécessaire de disposer en entrée d'un modulateur optique fonctionnant à des fréquences supérieures à 10 GHz et qui puisse être intégré avec le circuit électronique.

La présente invention porte sur un nouveau type de modulateur optoélectronique entièrement en silicium et donc intégrable avec la technologie des circuits intégrés CMOS et dans des microguides d'ondes optiques SOI. Les modulateurs dans la filière silicium sont basés sur la variation du nombre de porteurs libres (électrons ou (et) trous) dans la structure, qui induit une variation de l'indice de réfraction du matériau et conduit ainsi à une variation de phase de la lumière qui le traverse. Cette variation de phase est ensuite transformée en variation d'intensité en plaçant la zone active dans uns structure interférométrique de type cavité Fabry-Pérot ou interféromètre de Mach-Zehnder, dont les dimensions peuvent être réduites par l'utilisation de cristaux photoniques.

Deux solutions sont possibles pour la variation du nombre de porteurs : soit son augmentation par injection, soit sa diminution par désertion. Dans le premier cas, cela s'accompagne du passage d'un courant, donc de consommation électrique et dissipation thermique. De plus, c'est un phénomène qui fait intervenir les deux types de porteurs, dont la rapidité est limitée par le temps de recombinaison. Il est donc particulièrement avantageux d'utiliser la désertion, même si la variation d'indice de réfraction est un peu moins importante. Dans les structures de type MOSFET, la désertion des porteurs initialement présents sous l'effet de la polarisation de la grille est limitée par l'apparition d'une couche d'inversion contenant l'autre type de porteurs et est très localisée, donc peu efficace et non adaptée à l'intégration dans un guide optique. La création d'une couche d'accumulation conduit à de meilleures performances mais cette couche est également très localisée et a donc un faible recouvrement avec le mode optique d'un guide d'onde.

Dans des propositions antérieures d'utilisation de la désertion en structure guidée, les porteurs libres étaient des trous, localisés au voisinage du centre du guide dans des puits quantiques SiGe/Si, séparés par des barrières de silicium comportant des plans de dopage de type P fournissant ces trous à l'équilibre. Cette structure est placée dans une diode PIN polarisée en inverse pour chasser les trous de la zone active (fonctionnement par désertion). Cependant, le piégeage initial des trous dans les puits augmente le temps de réponse qui est de l'ordre de 50 à 100 ps. Par ailleurs, la technologie pour des composants incluant des puits quantiques ne doit pas inclure d'étapes à trop haute température, ce qui est une contrainte pour l'intégration avec la microélectronique.

Le modulateur proposé est entièrement en silicium et ne conserve de la structure précédente que les plans de dopage. Ce type de structure originale fonctionne également par désertion, mais soit avec des trous, soit avec des électrons, selon le type de dopage utilisé dans les plans. L'introduction des plans de dopage suffit à localiser les porteurs libres dans leur voisinage immédiat par effet de champ interne, et les porteurs n'ont plus de barrière de potentiel à franchir pour être balayés de la zone active. Le temps de réponse est donc beaucoup plus court, de l'ordre de quelques picosecondes. Les variations d'indice de réfraction attendues sont de l'ordre de quelque 10⁻⁴ pour des tensions appliquées de quelques volts, un peu plus élevées qu'avec les puits quantiques SiGe/Si. Elles s'accompagnent d'une variation d'absorption qui peut également être utilisée pour la modulation.

Les matériaux semi-conducteurs III-V sont fragiles, coûteux et les substrats restent de taille limitée. Ces dispositifs ne peuvent pas être intégrés facilement de façon monolithique sur des substrats silicium.
Un modulateur en silicium bénéficie de la technologie microélectronique, avec laquelle il peut être intégré, avec un faible coût et une production de masse possible sur des substrats de 200 à 300 mm de diamètre.
Les modulateurs de l'art antérieur dans la filière silicium, soit tout silicium fonctionnant par injection de porteurs ou par déplacement d'un plasma, soit avec des puits quantiques SiGe/Si en désertion, ont des fréquences de fonctionnement trop faibles pour les applications visées.
La présente invention propose un modulateur tout silicium, compatible avec la technologie CMOS, pouvant être intégré dans un microguide d'onde silicium sur isolant (SOI) et avec des temps de réponse intrinsèques de quelques picosecondes.

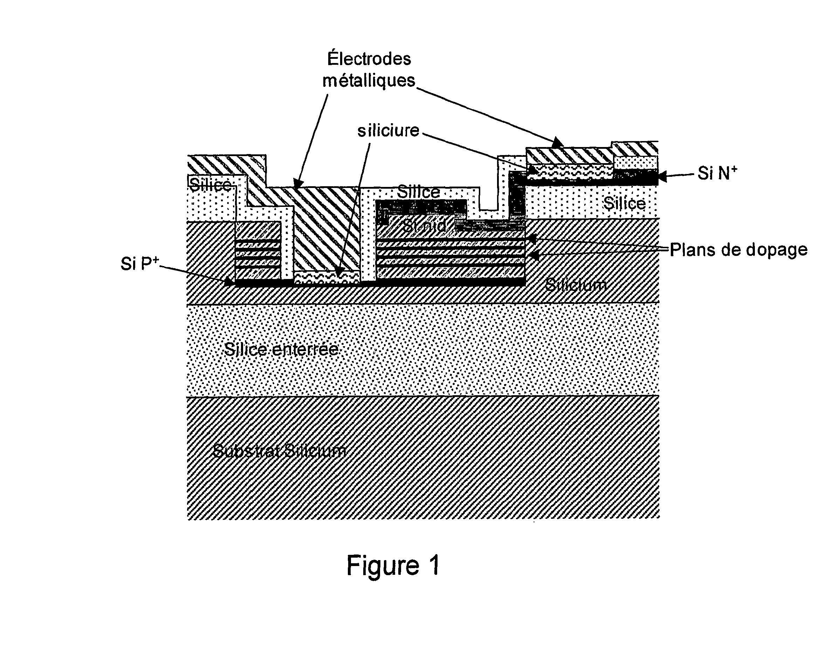

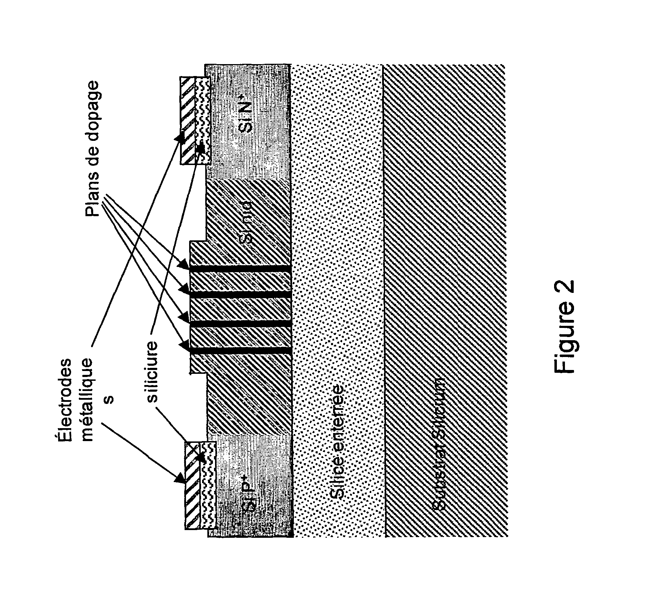

Dans la suite, nous nous attacherons à décrire deux procédés de réalisation du modulateur selon l'invention: l'un portant sur une structure verticale (illustrée Figure 1) et l'autre sur une structure horizontale (illustrée Figure 2).

Afin d'intégrer le modulateur dans un guide d'onde optique, le substrat est de type SOI (Silicon On Insulator), la couche de silice enterrée permettant de confiner le champ électromagnétique dans le film superficiel de silicium qui assure le guidage. La structure active est donc insérée dans une cuvette gravée dans le film de silicium du SOI, laissant ainsi une épaisseur minimale de silicium pour la reprise d'épitaxie (typiquement ≥ 30 nm).

L'ensemble de la structure est ensuite réalisé par croissance épitaxiale sélective. Différents types d'épitaxie peuvent être utilisés : il est ainsi possible de procéder par UHV-CVD (Ultra High Vacuum Chemical Vapor Deposition) ou par RP-CVD (Reduced Pressure Chemical Vapor Deposition). Cette dernière méthode autorise des dépôts plus rapides et est donc mieux adaptée au développement industriel. Dans les deux cas, on pourra choisir des techniques chimiques et des conditions de dépôt qui privilégient la sélectivité : le dépôt se fait uniquement sur le silicium et non sur la silice, qui peut avoir servi de masque pour la gravure de la cuvette. Il est également possible d'utiliser des techniques chimiques conduisant à un dépôt non sélectif : le silicium se dépose partout et on arase ensuite la structure par polissage mécano-chimique (CMP) qui ne laisse les couches épitaxiées que dans la cuvette.

Pour la réalisation de la diode PIN, la couche P⁺ est préférentiellement déposée d'abord, au fond de la cuvette, mais la structure peut également être inversée avec la couche N⁺ au fond. On fait croître ensuite du silicium non intentionnellement dopé (cristallin par épitaxie), dans lequel on insère des plans de dopage qui sont des couches fines de silicium (typiquement 5 à 10 nm d'épaisseur) dopées soit de type P, soit de type N, avec une concentration de porteurs de l'ordre de quelques 10¹⁸ cm⁻³. On termine par une couche de type N⁺ (ou P⁺ pour la structure inversée). Les couches de contact N⁺ et P⁺ doivent être assez fines et relativement peu dopées par rapport aux couches de contact habituelles pour limiter les pertes du mode optique par absorption sur les porteurs libres, comme pour la structure avec les puits SiGe, comme cela est mentionné dans la publication Design of a SiGe-Si Quantum-Well Optical Modulator (Delphine Marris et al., IEEE Journal of Selected Topics in Quantum Electronics, Vol. 9, No. 2, mai-juin 2003) . Le dopage P est obtenu avec en général du Bore, le dopage N avec de l'Arsenic ou du Phosphore.
Le confinement latéral du mode guidé étant assuré par la définition d'une arête, il conviendra de la graver, par une gravure anisotrope, par exemple par RIE (Reactive Ion Etching). Par ailleurs, afin d'éviter des pertes prohibitives sur le métal des électrodes, il sera nécessaire de déporter le contact électrique par rapport à cette arête. Une solution est donc de graver l'arête avant la croissance de la couche dopée supérieure N⁺ (P⁺ pour la structure inversée). Cette couche est réalisée par une reprise d'épitaxie en chimie non sélective pour déposer une couche de silicium dopé N⁺ (P⁺ pour la structure inversée), qui sera cristallin sur le silicium et polycristallin sur la silice, et qui permettra d'assurer la continuité électrique jusqu'à une électrode placée au dessus de la silice.

L'étape suivante consiste en la gravure d'une tranchée le long de l'arête du guide optique pour aller prendre le contact électrique sur la couche P⁺ (N⁺ pour la structure inversée), d'en isoler les flancs par un dépôt de silice. Des fenêtres sont ouvertes dans la silice pour le dépôt de métal des deux électrodes.

Avant le dépôt de métal, on peut avantageusement améliorer le contact électrique par la formation d'un siliciure, par exemple un siliciure de nickel ou de platine. Le métal est ensuite déposé, puis gravé pour l'éliminer en dehors des zones constituant les électrodes.

La mise en oeuvre de la reprise d'épitaxie non sélective pour la couche dopée supérieure, permettant de déporter le contact électrique sur le côté de l'arête du guide, est une étape particulièrement importante du procédé décrit ici. Cette étape n'est pas connue des publications et documents techniques de l'art antérieur.

Une autre solution consiste à réaliser des plans de dopage verticaux, la diode PIN se trouvant horizontale et non plus verticale, comme cela est illustré Figure 2.
Dans ce mode de réalisation, la technologie est différente et particulièrement originale. Selon une variante avantageuse, les plans de dopage peuvent être réalisés au moyen de la technique de dopage laser. Cette technique permet d'incorporer les dopants sur des épaisseurs de quelques centaines de nanomètres et sur une largeur qui peut être inférieure à 100 nm. Cette technique est basée sur la fusion localisée du Silicium en présence d'un gaz comme le di-borane (par exemple) pour le bore (dopage P), l'arsine ou la phosphine pour As ou P (dopage N). Les zones de contact P⁺ et N⁺ de la diode peuvent être réalisés au moyen de la même technique.

Ensuite, les étapes suivantes sont à mettre en oeuvre :
- masque pour le dopage de type P ;
- masque pour le dopage de type N ;
- dépôt de silice ;
- ouvertures pour les prises de contact (formation du siliciure et métallisation).

Selon une autre variante, la structure pourrait être réalisée par croissance épitaxiale latérale à partir d'une face verticale définie dans la direction cristalline (100)
Un des avantages de la structure horizontale consiste en l'écartement des zones de contact par rapport au mode optique, ce qui provoque une nette diminution des pertes optiques de propagation, les contacts pouvant être davantage dopés afin de diminuer leur résistance, qui intervient dans le temps de réponse par des constantes de temps de type RC.

L'invention est décrite dans ce qui précède à titre d'exemple. Il est entendu que l'homme du métier est à même de réaliser différentes variantes de l'invention sans pour autant sortir du cadre du brevet.

## Revendications

1. Composant optoélectronique fonctionnant par désertion de porteurs pour commander un signal optique comportant un microguide d'onde en arête dans un substrat de type silicium sur isolant, une zone active formée d'une pluralité de couches minces de silicium soit dopées par δ-dopage de type N⁺ soit dopées de type P⁺ formant des plans de dopage ladite zone active étant placée entre une zone dopée N⁺ et une zone dopée P⁺, formant une diode PIN et étant reliées à deux électrodes disposées de part et d'autre de ladite zone active permettant de polariser la diode PIN, ledit composant optoélectronique étant **caractérisé en ce qu'**il est entièrement composé de silicium.

2. Composant optoélectronique selon la revendication 1, **caractérisé en ce que** lesdites couches minces de silicium sont soit toutes dopées de type N⁺, soit toutes dopées de type P⁺.

3. Composant optoélectronique selon la revendication 1 ou 2, **caractérisé en ce que** lesdites couches minces sont parallèles au substrat.

4. Composant optoélectronique selon la revendication 3, **caractérisé en ce que** l'électrode supérieure est décalée latéralement par rapport à la zone active définie par l'arête du microguide.

5. Composant optoélectronique selon la revendication 2, 3 ou 4, **caractérisé en ce que** la seconde électrode vient en contact avec la couche inférieure de silicium dopée se prolongeant latéralement au-delà de la zone active.

6. Composant optoélectronique selon l'une quelconque des revendications 1 à 5, **caractérisé en ce que** l'une au moins des deux électrodes vient en contact avec une couche de silicium dopé (N⁺ ou P⁺) par l'intermédiaire d'une couche de siliciure.

7. Composant optoélectronique selon la revendication 1, **caractérisé en ce que** les lesdites couches minces sont perpendiculaires au substrat.

8. Composant optoélectronique selon l'une des revendications 1 à 7, **caractérisé en ce qu'**il est fabriqué selon le procédé consistant à procéder à une croissance épitaxiale de couche minces de silicium (δ-dopage) N⁺ ou P⁺.

9. Composant optoélectronique selon l'une des revendications 1 à 7, **caractérisé en ce qu'**il est fabriqué selon le procédé consistant à réaliser les plans de dopage N⁺ ou P⁺ par dopage laser.

10. Application d'un composant optoélectronique selon l'une au moins des revendications 1 à 9, pour la réalisation d'un commutateur optoélectronique.

11. Application d'un composant optoélectronique selon l'une au moins des revendications 1 à 9, pour la réalisation d'un modulateur optoélectronique.

## Claims

1. An optoelectronic component operating through carrier depletion to control an optical signal including an edge wave micro-guide in a substrate of the silicon type on an insulator, an active zone composed of a plurality of thin silicon layers doped either by δ-doping, of the N⁺-type, or of the P⁺-type, forming doping planes, said active zone being positioned between an N⁺-doped zone and a P⁺-doped zone, forming a PIN diode and being connected to two electrodes positioned on either side of said active zone making it possible to bias the PIN diode, said optoelectronic component being **characterized in that** it is entirely made of silicon.

2. An optoelectronic component according to claim 1,
**characterized in that** said thin silicon layers are either all N⁺-doped or all P⁺-doped.

3. An optoelectronic component according to claim 1 or 2, **characterized in that** said thin layers are parallel to the substrate.

4. An optoelectronic component according to claim 3,
**characterized in that** the upper electrode is laterally offset with respect to the active zone defined by the micro-guide edge.

5. An optoelectronic component according to claim 2, 3 or 4, **characterized in that** the second electrode comes into contact with the lower doped silicon layer extending laterally beyond the active zone.

6. An optoelectronic component according to any one of claims 1 to 5, **characterized in that** at least one of the two electrodes comes into contact with a (N⁺- or P⁺-doped) silicon layer through a silicide layer.

7. An optoelectronic component according to claim 1,
**characterized in that** said thin layers are perpendicular to the substrate.

8. An optoelectronic component according to one of claims 1 to 7, **characterized in that** it is made according to the method consisting in performing an epitaxial growth of N⁺-or P⁺-doped (δ-doping) thin silicon layers.

9. An optoelectronic component according to one of claims 1 to 7, **characterized in that** it is made according to the method consisting in making the N⁺- or P⁺-doping plans by laser-doping.

10. The application of an optoelectronic component according to at least one of claims 1 to 9, for making an optoelectronic switch.

11. The application of an optoelectronic component according to at least one of claims 1 to 9, for making an optoelectronic modulator.

## Patentansprüche

1. Optoelektronische Komponente, die durch Desertierung von Trägern fonktionniert, zum Steuern eines optischen Signals, das einen Mikrowellenleiter mit Kante in einem Substrat von der Art Silizium auf Isolierstoff umfaßt, eine aktive Zone, die aus einer Vielzahl von Siliziumüberzügen gebildet wird, entweder gedopt mit Delta-Doping von der Art N⁺, oder gedopt mit Delta-Doping von der Art P⁺, die Dopingebenen bilden, wobei die besagte aktive Zone (3) zwischen einer N⁺ gedopten Zone und einer P⁺ gedopten Zone plaziert ist, die eine PIN Diode bilden und mit zwei Elektroden verbunden sind, die zu beiden Seiten der besagten aktiven Zone angeordnet sind und das Polarisieren der PIN Diode ermöglichen, wobei die besagte optoelektronische Komponente **dadurch gekennzeichnet ist, daß** sie vollkommen aus Silizium gebildet wird.

2. Optoelektronische Komponente nach Anspruch 1, **dadurch gekennzeichnet, daß** die besagten Siliziumüberzüge entweder alle von der Art N⁺ gedopt sind, oder alle von der Art P⁺ gedopt sind.

3. Optoelektronische Komponente nach Anspruch 1 oder 2, **dadurch gekennzeichnet, daß** die besagten Überzüge parallel zum Substrat verlaufen.

4. Optoelektronische Komponente nach Anspruch 3, **dadurch gekennzeichnet, daß** die obere Elektrode gegenüber der aktiven Zone seitlich versetzt ist, die durch die Kante des Mikroleiters definiert wird.

5. Optoelektronische Komponente nach Anspruch 2, 3 oder 4, **dadurch gekennzeichnet, daß** die zweite Elektrode in Berührung mit der unteren gedopten Siliziumschicht gelangt, die sich seitlich über die aktive Zone hinaus verlängert.

6. Optoelektronische Komponente nach einem beliebigen der vorstehenden Ansprüche 1 bis 5, **dadurch gekennzeichnet, daß** zumindest eine der beiden Elektroden vermittels einer Siliziumschicht in Berührung mit einer gedopten Siliziumschicht (N⁺ oder P⁺) gelangt.

7. Optoelektronische Komponente nach Anspruch 1, **dadurch gekennzeichnet, daß** die besagten Überzüge senkrecht zum Substrat verlaufen.

8. Optoelektronische Komponente nach einem beliebigen der vorstehenden Ansprüche 1 bis 7, **dadurch gekennzeichnet, daß** sie nach dem Verfahren hergestellt wurde, das darin besteht, ein epitaxisches Wachstum der Siliziumüberzüge (delta-Doping) N⁺ oder P⁺ vorzunehmen.

9. Optoelektronische Komponente nach einem beliebigen der vorstehenden Ansprüche 1 bis 7, **dadurch gekennzeichnet, daß** sie nach einem Verfahren hergestellt wird, das darin besteht, die Dopingebenen N⁺ oder P⁺ durch Laserdoping auszuführen.

10. Anwendung einer optoelektronischen Komponente nach mindestens einem beliebigen der vorstehenden Ansprüche 1 bis 9 für die Realisierung eines optoelektronischen Schalters.

11. Anwendung einer optoelektronischen Komponente nach mindestens einem beliebigen der vorstehenden Ansprüche 1 bis 9 für die Realisierung eines optoelektronischen Modulators.
